# EUROPEAN PATENT APPLICATION

(11) **EP 1 037 034 A1**
(43) Date of publication of application: **20.09.2000**
(21) Application number: 99301680.7
(22) Date of filing: 05.03.1999
(51) Int. Cl.: G01N 1/28, B01D 63/08, B01D 61/18, C12Q 1/68, C12M 1/33

(54) **Membrane filter assembly**

(71) Applicant: The Automation Partnership (Cambridge) Limited, Royston, Hertfordshire SG8 6HB (GB)
(72) Inventor: Woodall, Stephen Peter, Sandy, Bedfordshire SG19 3QP (GB); Dunlop, Stuart John, Milton, Cambridgeshire CB4 6ZL (GB); Ahmadi, Alireza, Edgeware, Middlesex HA8 0PB (GB)
(74) Representative: Brunner, Michael John

(57) **Abstract**

A membrane filter assembly 1 is disclosed for use in a wet chemical process. The filter assembly includes a membrane 2 and a pair of membrane supports 3, which are attached at each of a pair of opposed edges of the membrane. Each of the supports includes an elongate member 31 having a pair of end fixing points for attachment of the membrane 2 to the support, and one or more resilient flexures 32 which may be flexed in a direction transverse to the length of the member and compressed longitudinally, thereby imparting tension to the respective side of the membrane 2 after attachment.

## Description

The present invention relates to membrane filter assemblies for use in wet chemical processing of the type utilised in gene mapping and sequencing or similar processes.

In such processes small amounts of biological material are often required to be deposited on a support which carries the material through a number of processing steps, typically including incubation, binding, hybridisation, scanning, illumination and drying.

Conventionally small amounts of biological material are deposited by hand in an array on a membrane filter material which may be a coated nylon sheet, the filter membranes then being moved manually from processing station to processing station in steps, with any necessary spraying also being done by hand.

It has been suggested to laminate such filter materials onto a plastic support carrier to allow automated processing, but such a process does not allow access to both sides of the filter membrane which is often necessary.

Because the filter material is in the form of a membrane sheet, it requires external support if it is going to be used in an automated process and moved automatically from one stage of the process to the next. A further difficulty with such membrane filter materials is that, once wet, they tend to expand in the plane of the membrane.

Accordingly, there is a need to provide a system capable of simply and effectively supporting membrane filters of this type to allow them to be moved through an automated process.

According to the present invention there is provided a membrane filter assembly for use in a wet chemical process, the filter assembly comprising
a membrane; and
a pair of membrane supports, one attached at each of a pair of opposed edges of the membrane, each of the supports including
   an elongate member having a pair of end fixing points for attachment of the membrane to the support, and
   one or more resilient flexures flexed in a direction transverse to the length of the member and compressed longitudinally, thereby imparting tension to the respective side of the membrane.

The membrane is attached to the supports by means of adhesive or by mechanical fixings such as spiked grippers or the like.

The invention also includes a membrane support for attachment at a edge of a biological sample manipulation membrane, the support including
an elongate member having a pair of end fixing points for attachment of the membrane to the support, and
one or more resilient flexures flexed in a direction transverse to the length of the member and compressed longitudinally, to thereby impart tension to the respective side of the membrane.

The membrane may, as is conventional, be formed of a nylon sheet material coated on one or both sides.

Each support may be formed of PVC, but may more suitably be formed of other synthetic plastics materials such as ABS, polycarbonate, etc, depending on the conditions under which the filter assembly is intended for use.

Each support preferably has a substantially rectangular cross-sectional envelope in order to impart stiffness in the torsional direction and each of the resilient flexures comprises a leaf-spring like element.

Preferably, membrane filter assemblies of the type defined above are group together in small numbers to allow automated processing of a large number of individual amounts of the material, the membrane supports being held in a suitable frame arranged to tension the filter membrane in the direct between the supports, i.e. orthogonal to the direction of the tension provided by the membrane support members.

The support members may, for this purpose, include locating sockets or holes or the like which can be disposed on corresponding spigots in members of the frame, one or more of the frame members associated with each filter assembly being resilient and being deformable to secure the corresponding membrane support in order that a biasing force is provided to tension the filter assembly.

One example of a membrane filter assembly constructed in accordance with the present invention will now be described with reference to the accompanying drawings in which:
Figures 1A and 1B illustrate a filter assembly and its associated membrane supports; and,
Figures 2A-2D illustrate a frame in which the filter assemblies may be located and possible stacking options;

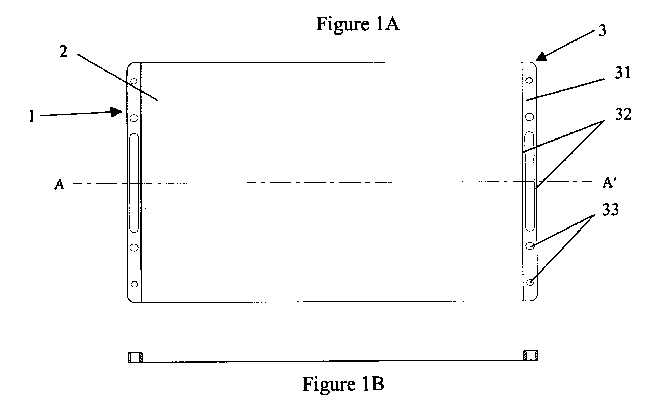

Figures 1A and 1B illustrate respective underneath plan view and sectional views of a filter assembly 1. The filter assembly includes a filter membrane which may be one of a number of types, for example, Biodyne H or Biodyne B made by Pall Filtration, Hybond N Plus made by Amersham Life Science, Millipore N Plus made by Millipore Corp, to name a few.

The filter membrane is generally rectangular in shape in this example and at each of two opposed edges there is provided a support member 3 formed of a suitable plastics material such as ABS, polycarbonate, nylon etc. In this example the supports are secured to the membrane material by small dabs of adhesive (not shown) at each end of each support. Each support, as can be seen from Figure 1A in particular, has a pair of end portions 31 and a pair of resilient flexures 32. By this construction the overall length of each support can be reduced by squeezing together the flexures 32 thus drawing the end portions 31 towards one another. If a support is secured, eg. by adhesive, to the membrane in shortened condition then the resilience of the flexures 32 provides a bias tending to extend the support and thus tensioning the filter membrane 2 attached to it.

Each of the end portions has a pair of holes 33 by means of which a support member can be attached to corresponding frame members 41, 42 of a frame 4 which is arranged to hold together six filter assemblies of the type shown in Figures 1A & 1B.

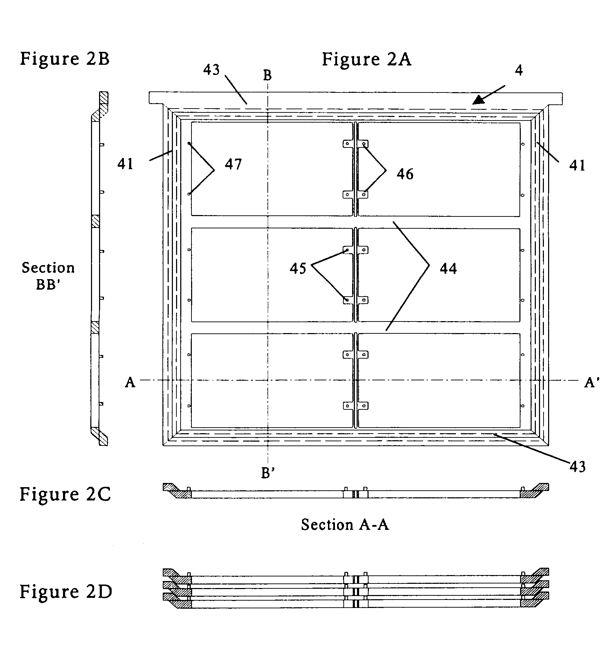

As can be seen from Figures 2A to 2D, particularly, figure 2A, the frame is generally rectangular in shape and comprises a pair of side members 41 with top and bottom cross-members 43 and internal transverse members 44, the top and bottom members 43 and the cross-members 44 supporting tensioning members 42 in the form of flexures similar to those used in the supports 3. Each of the tensioning members 42 carries a flange 45 which in turn carries a spigot 46 for engagement with one of the holes 33 in a corresponding membrane support 3. The supports 3 are secured to the membrane 2 in each case such that the overall length of the filter assembly between opposed holes 33 on the opposite supports 3 is very slightly less than the distance between the opposed pairs of spigots 46, 47 so that, in order to secure the filter assemblies within the frame, the tensioning members 42 have to be flexed towards the respective side frame member 41. The membrane is then under tension in the direction orthogonal to the tensioning direction provided by the membrane supports 3.

The frame members may be used in a wet chemical processing line in which various steps in the process are automated in order to simplify and speed-up the overall process. In an early step in the process, multiple small amounts of a selected biological material are deposited onto a surface of the membrane in a two-dimensional array so as to forms rows and columns of small samples of the material. During subsequent steps, when the membrane becomes wet, the ability of the supports to extend longitudinally, maintains the membrane in a taut condition.

Although the example shown above illustrates a single type of support and a single type of frame 4, it will be appreciated that each of the supports may comprise but a single flexure or may comprise multiple flexures arranged in parallel or in longitudinal alignment or a combination, as desired, depending upon the desired size of the filter assembly, the particular type of membrane used, etc. Similarly, the frame may accommodate one or more filter assemblies in any one of a number of different frames as desired.

## Claims

1. A membrane support for attachment at a edge of a biological sample manipulation membrane, the support including
an elongate member having a pair of end fixing points for attachment of the membrane to the support, and
one or more resilient flexures flexed in a direction transverse to the length of the member and compressed longitudinally, to thereby impart tension to the respective side of the membrane.

2. A membrane support according to claim 1, wherein each support is formed of a synthetic plastics material.

3. A membrane support according to claim 1 or claim 2, wherein each support has a substantially rectangular cross-sectional envelope in order to impart stiffness in the torsional direction

4. A membrane support according to any of claims 1 to 3, wherein each of the resilient flexures comprises a leaf-spring like element.

5. A membrane support according to any of claims 1 to 4, wherein the support members include locating sockets or holes or the like which can be disposed on corresponding spigots in members of a supporting frame.

6. A membrane filter assembly including a plurality of supports according to any of claims 1 to 5.

7. A membrane filter assembly for use in a wet chemical process, the filter assembly comprising
a membrane; and
a pair of membrane supports, one attached at each of a pair of opposed edges of the membrane, each of the supports including
an elongate member having a pair of end fixing points for attachment of the membrane to the support, and
one or more resilient flexures flexed in a direction transverse to the length of the member and compressed longitudinally, thereby imparting tension to the respective side of the membrane.

8. A membrane filter assembly according to claim 6 or claim 7, wherein the membrane is attached to the supports by means of adhesive.

9. A membrane filter assembly according to claim 6 or claim 7, wherein the membrane is attached to the supports by means of mechanical fixings.

10. A frame for carrying one or more membrane filter assemblies according to any of claims 6 to 9, the frame including members for supporting the membrane supports of a filter assembly so as to tension the filter membrane in the direct between the supports, i.e. orthogonal to the direction of the tension provided by the membrane supports.

11. A frame according to claim 10, wherein the frame members or the supports include locating sockets or holes which are disposed on corresponding spigots on the other of the supports or frame members respectively.

12. A frame according to claim 10 or claim 11, wherein one or more of the frame members associated with each filter assembly is resilient and is deformable to secure the corresponding membrane support in order that a biasing force is provided to tension the filter assembly.
